# EUROPEAN PATENT APPLICATION

(11) **EP 3 927 045 A1**
(43) Date of publication of application: **22.12.2021**
(21) Application number: 19914944.4
(22) Date of filing: 14.02.2019
(51) Int. Cl.: H04W 72/04, H04W 16/32, H04W 36/08

(54) **USER DEVICE AND BASE STATION DEVICE**

(71) Applicant: NTT DOCOMO, INC., Chiyoda-Ku Tokyo 100-6150 (JP)
(72) Inventor: TAKAHASHI, Hideaki, Tokyo 100-6150 (JP); MIN, Tianyang, Tokyo 100-6150 (JP); UCHINO, Tooru, Tokyo 100-6150 (JP)
(74) Representative: Hoffmann Eitle
(86) International application number: PCT/JP2019/005414
(87) International publication number: WO 2020/166021

(57) **Abstract**

A user equipment includes a communication unit that performs communication to which dual connectivity configured by a master cell group and a secondary cell group is applied, a control unit that detects an occurrence of a failure in the master cell group, and a transmitting unit that transmits information related to the occurrence of the failure in the master cell group to a master node of the master cell group, in which, in a state in which the communication unit continues a connection with a secondary node of the secondary cell group, the control unit changes a primary cell to another cell by handover in the same radio access technology (RAT).

## Description

### TECHNICAL FIELD

The present invention relates to a user equipment and a base station device in a wireless communication system.

### BACKGROUND ART

In New Radio (NR) (also referred to as "5G") which is a successor system of Long Term Evolution (LTE), technology satisfying a large-capacity system, a high-speed data transmission rate, a low delay, simultaneous connection of multiple terminals, a low cost, power saving, and the like is discussed (for example, Non-Patent Document 1).

In an NR system, similarly to dual connectivity in an LTE system, a technique called LTE-NR dual connectivity, NR-NR dual connectivity, or Multi Radio Access Technology (Multi RAT) dual connectivity (hereinafter, "MR-DC") of dividing data between a base station (eNB) of the LTE system and a base station (gNB) of the NR system and simultaneously transmitting and receiving data through the base stations has been introduced (for example, Non-Patent Document 2).

### CITATION LIST

### NON-PATENT DOCUMENT

Non-Patent Document 1: 3GPP TS 38.300 V15.4.0 (2018-12)
Non-Patent Document 2: 3GPP TS 37.340 V15.4.0 (2018-12)

### SUMMARY OF THE INVENTION

### PROBLEM TO BE SOLVED BY THE INVENTION

In the LTE-NR dual connectivity, the NR-LTE dual connectivity, or the NR-NR dual connectivity, when a connection failure occurs in a master cell group, a procedure of reestablishing a connection is executed, and it takes time to recover a connection.

The present invention was made in light of the foregoing, and it is an object of the present invention to quickly recover from a connection failure in dual connectivity executed by a wireless communication system.

### MEANS FOR SOLVING PROBLEM

According to the disclosed technique, a user equipment including a communication unit that performs communication to which dual connectivity configured by a master cell group and a secondary cell group is applied, a control unit that detects an occurrence of a failure in the master cell group, and a transmitting unit that transmits information related to the occurrence of the failure in the master cell group to a master node of the master cell group, in which, in a state in which the communication unit continues a connection with a secondary node of the secondary cell group, the control unit changes a primary cell to another cell by handover in the same radio access technology (RAT), is provided.

### EFFECT OF THE INVENTION

According to the disclosed technology, it is possible to quickly recover from a connection failure in dual connectivity executed by a wireless communication system.

### BRIEF DESCRIPTION OF DRAWINGS

Fig. 1 is a diagram illustrating a configuration example of a network architecture in an embodiment of the present invention;
Fig. 2 is a diagram illustrating a configuration example of a wireless communication system in an embodiment of the present invention;
Fig. 3 is a sequence diagram for describing an operation example (1) in an embodiment of the present invention;
Fig. 4 is a sequence diagram for describing an operation example (2) in an embodiment of the present invention;
Fig. 5 is a flowchart for describing an operation example (1) in an embodiment of the present invention;
Fig. 6 is a flowchart for describing an operation example (2) in an embodiment of the present invention;
Fig. 7 is a flowchart for describing an operation example (3) in an embodiment of the present invention;
Fig. 8 illustrates a specification change example (1) related to an operation example in an embodiment of the present invention;
Fig. 9 illustrates a specification change example (2) related to an operation example in an embodiment of the present invention;
Fig. 10 illustrates a specification change example (3) related to an operation example in an embodiment of the present invention;
Fig. 11 illustrates a specification change example (4) related to an operation example in an embodiment of the present invention;
Fig. 12 illustrates a specification change example (5) related to an operation example in an embodiment of the present invention;
Fig. 13 illustrates a specification change example (6) related to an operation example in an embodiment of the present invention;
Fig. 14 illustrates a specification change example (7) related to an operation example in an embodiment of the present invention;
Fig. 15 illustrates a specification change example (8) related to an operation example in an embodiment of the present invention;
Fig. 16 illustrates a specification change example (9) related to an operation example in an embodiment of the present invention;
Fig. 17 illustrates a specification change example (10) related to an operation example in an embodiment of the present invention;
Fig. 18 illustrates a specification change example (11) related to an operation example in an embodiment of the present invention;
Fig. 19 illustrates a specification change example (12) related to an operation example in an embodiment of the present invention;
Fig. 20 illustrates a specification change example (13) related to an operation example in an embodiment of the present invention;
Fig. 21 is a diagram illustrating an example of the functional configuration of a base station device 10 in an embodiment of the present invention;
Fig. 22 is a diagram illustrating an example of a functional configuration of a user equipment 20 in an embodiment of the present invention; and
Fig. 23 is a diagram illustrating an example of a hardware configuration of a base station device 10 or a user equipment 20 in an embodiment of the present invention.

### MODE(S) FOR CARRYING OUT THE INVENTION

Hereafter, exemplary embodiments of the present invention will be described with reference to the appended drawings. Embodiments to be described below are an example, and embodiments to which the present invention is applied are not limited to the following embodiments.

The existing technology is appropriately used for an operation of a wireless communication system of an embodiment of the present invention. Here, the existing technology is, for example, the existing LTE but is not limited to the existing LTE. The term "LTE" used in this specification has a broad meaning including LTE-Advanced and schemes after LTE-Advanced (for example, NR) unless otherwise specified.

Also, in an embodiment of the present invention to be described below, terms such as a synchronization signal (SS), a primary SS (PSS), a secondary SS (SSS), a physical broadcast channel (PBCH), a physical random access channel (PRACH) used in the existing LTE are used. This is for convenience of description, and signals, functions, or the like similar to them may be indicated by other names. The above terms in NR correspond to NR-SS, NR-PSS, NR-SSS, NR-PBCH, NR-PRACH, and the like. However, even a signal used for NR is not always indicated by "NR-."

Also, in an embodiment of the present invention, a duplex scheme may be a Time Division Duplex (TDD) scheme, may be a Frequency Division Duplex (FDD) scheme, or may be other schemes (for example, Flexible Duplex or the like).

Further, in an embodiment of the present invention, when a radio parameter or the like is "configured," it may mean that a predetermined value is pre-configured or may mean that a radio parameter indicated from a base station device 10 or a user equipment 20 may be configured.

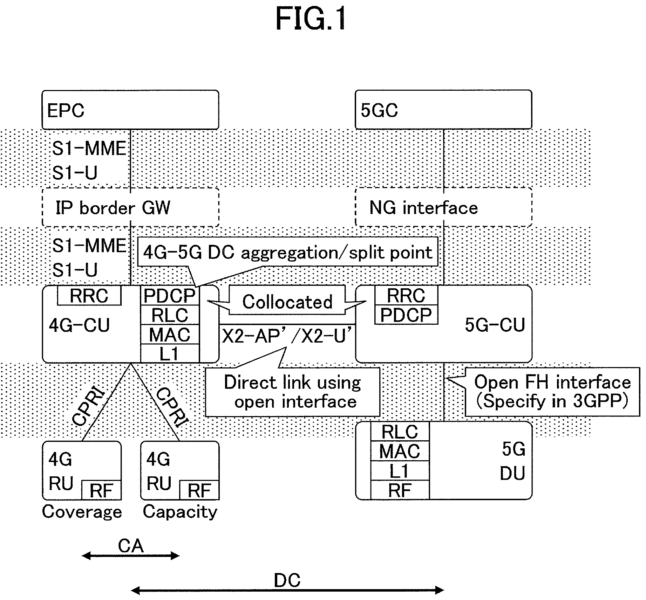

Fig. 1 is a diagram illustrating a configuration example of a network architecture in an embodiment of the present invention. As illustrated in Fig. 1, a radio network architecture in an embodiment of the present invention includes a 4G-CU, a 4G-RU (a remote unit or a remote radio station), an evolved packet core (EPC), and the like on an LTE-Advanced side. A radio network architecture in an embodiment of the present invention includes a 5G-CU, a 5G-DU, and the like on the 5G side.

As illustrated in Fig. 1, the 4G-CU includes layers of radio resource control (RRC), packet data convergence protocol (PDCP), radio link control (RLC), medium access control (MAC), L1 (a layer 1, a PHY layer, or a physical layer) and is connected with the 4G-RU via a common public radio interface (CPRI). A network node including the 4G-CU and the 4G-RU is referred to as an eNB.

Furthermore, on the 5G side, as illustrated in Fig. 1, the 5G-CU includes an RRC layer, is connected with the 5G-DU via an flonthaul (FH) interface, and is connected with a 5G core network (5GC) via an NG interface. The 5G-CU is connected with the 4G-CU via an X2 interface. The PDCP layer in the 4G-CU is a coupling or splitting point for performing 4G-5G dual connectivity (DC), that is, E-UTRA-NR dual connectivity (EN-DC). The network node including the 5G-CU and the 5G-DU is referred to as a gNB. Also, the 5G-CU is also referred to as a gNB-CU, and the 5G-DU is also referred to as a gNB-DU.

As illustrated in Fig. 1, carrier aggregation (CA) is performed between the 4G-RUs, and DC is performed between the 4G-RUs and the 5G-DU. Although not illustrated, a user equipment (UE) is wirelessly connected via a RF of the 4G-RU or the 5G-DU and transmits and receives packets.

Fig. 1 illustrates a radio network architecture at the time of DC of LTE-NR, that is, E-UTRA-NR dual connectivity (EN-DC). However, a similar radio network architecture may be used when the 4G-CU is split into CU-DU or when NR stand alone is used. When the 4G-CU is split into CU-DU, functions related to the RRC layer and the PDCP layer may be transferred to the 4G-CU, and the RLC layer and the layers therebelow may be included in the 4G-DU. A data rate of the CPRI data may be reduced by CU-DU splitting.

A plurality of 5G-DUs may be connected to the 5G-CU. Also, NR-NR dual connectivity (NR-DC) may be performed when a UE is connected to a plurality of 5G-CUs, and NR-DC may be performed when a UE is connected to a plurality of 5G-DUs and a single 5G-CU.

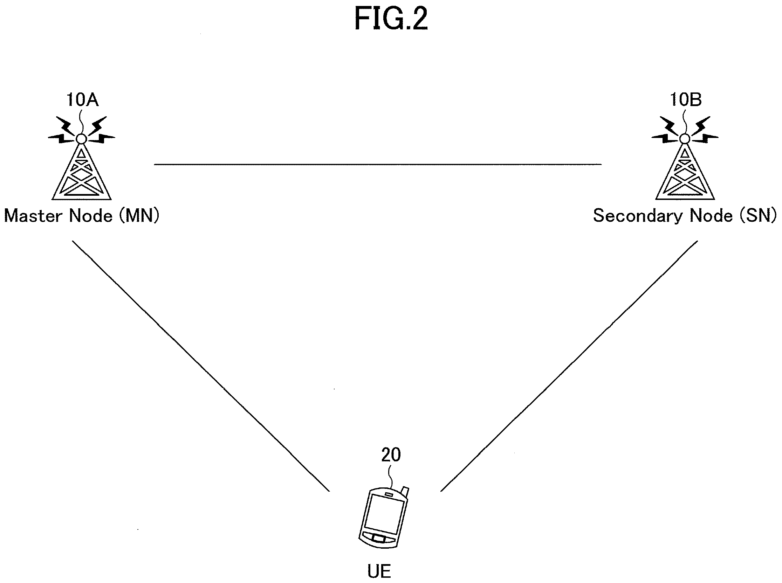

Fig. 2 is a diagram illustrating a configuration example of a wireless communication system according to an embodiment of the present invention. Fig. 2 is a schematic diagram illustrating a wireless communication system at the time of the Multi-RAT dual connectivity (MR-DC).

As illustrated in Fig. 2, a user equipment 20 performs communication with a base station device 10A provided by the NR system and a base station device 10B provided by the NR system (hereinafter, when the base station device 10A and the base station device 10B are not distinguished, they are referred to as a "base station device 10"). Further, the user equipment 20 supports the NR-NR dual connectivity, that is, the NR-DC in which the base station device 10A is used as a master node (hereinafter also referred to as "MN"), and the base station device 10B is used as a secondary node (hereinafter also referred to as "SN"). The user equipment 20 can execute simultaneous transmission or simultaneous reception with the base station device 10A which is the master node and the base station device 10B which is the secondary node by simultaneously using a plurality of component carriers provided by the base station device 10A which is the master node and the base station device 10B which is the secondary node. The master node may add a cell by CA and provide a master cell group (hereinafter also referred to as "MCG"), and the secondary node may add a cell by CA and provide a secondary cell group (hereinafter also referred to as "SCG").

Further, as illustrated in Fig. 2, the user equipment 20 may communicate with a base station device 10A provided by the LTE system and a base station device 10B provided by the NR system. Further, the user equipment 20 may support the LTE-NR dual connectivity, that is, the EN-DC in which the base station device 10A is used as the MN, and the base station device 10B is used as the SN. The user equipment 20 can execute simultaneous transmission or simultaneous reception with the base station device 10A which is the master node and the base station device 10B which is the secondary node by simultaneously using a plurality of component carriers provided by the base station device 10A which is the master node and the base station device 10B which is the secondary node.

Further, as illustrated in Fig. 2, the user equipment 20 may communicate with a base station device 10A provided by the NR system and a base station device 10B provided by the LTE system. Further, the user equipment 20 may support the NR-LTE dual connectivity, that is, NR-E-UTRA dual connectivity (NE-DC) in which the base station device 10A is used as the MN, and the base station device 10B is used as the SN. The user equipment 20 can execute simultaneous transmission or simultaneous reception with the base station device 10A which is the master node and the base station device 10B which is the secondary node by simultaneously using a plurality of component carriers provided by the base station device 10A which is the master node and the base station device 10B which is the secondary node.

Further, although the following examples are described regarding the LTE-NR dual connectivity, the NR-LTE dual connectivity, or the NR-NR dual connectivity, the user equipment 20 according to an embodiment of the present invention is not limited to the above dual connectivities and can be applied to dual connectivity between a plurality of wireless communication systems using different RATs, that is, MR-DC.

Here, the support for fast recovery in the MR-DC is discussed. For example, the fast recovery is a method of using a link of the secondary cell group and a split signaling radio bearer (SRB) for recovery from a failure in the master cell group.

A radio link failure (RLF) is determined separately for the MCG and the SCG. In a case in which the RLF is detected in the MCG, the user equipment 20 starts an RRC connection re-establishment procedure. A NG-RAN E-UTRA-NR dual connectivity (NGEN-DC) is dual connectivity between an eNB which is a master node connected to the 5GC and a gNB which is the secondary node.

Furthermore, the following cases 1) to 4) are supported for an SCG failure:
1) an RLF in the SCG;
2) an SN change failure;
3) an SCG configuration failure in an SRB3 in the EN-DC, the NGEN-DC, or the NR-DC; and
4) an SCG integrity check failure in an SRB3 in the EN-DC, the NGEN-DC, or the NR-DC.

In a case in which the RLF is detected in the SCG, the user equipment 20 interrupts transmission of all radio bearers in the SCG and transmits "SCG failure information" to the MN instead of re-establishing connection. In a case in which the SCG failure occurs, the user equipment 20 maintains the current measurement settings of both the MN and the SN, and continues measurement based on the measurement settings if possible. The measurement in the SN is reported via the MN after the SCG failure occurs.

The user equipment 20 includes the measurement result based on the current measurement settings of both the MN and the SN in an SCG failure information message. The MN processes the SCG failure information message and decides whether to maintain, change, or release the SN or the SCG. In all the above SCG failure cases, the measurement result and the SCG failure type based on the SN configuration may be transferred to an old SN and/or a new SN.

The following cases 1) to 3) are cell group failure cases in the MR-DC. The SCG failure type may be information indicating one of the cases 1) to 3):
1) only an SCG failure occurs;
2) only an MCG failure occurs; and
3) both an MCG failure and an SCG failure occur.

In the case 2) in which only the MCG failure occurs, the MCG is recovered while continuing communication through the SCG as the fast recovery function. In the case 3) in which both the MCG failure and the SCG failure occur, the RRC connection re-establishment is executed.

As a method of realizing the fast recovery in the case 2) in which only the MCG failure occurs, for example, MCG transmission is suspended, and the MCG failure information is transmitted to the SN. The measurement of the MCG continues. After the MN receives the MCG failure information, the MN decides whether to maintain or change the MCG or the MN executes intra-RAT handover or inter-RAT handover to switch the SCG to the MCG.

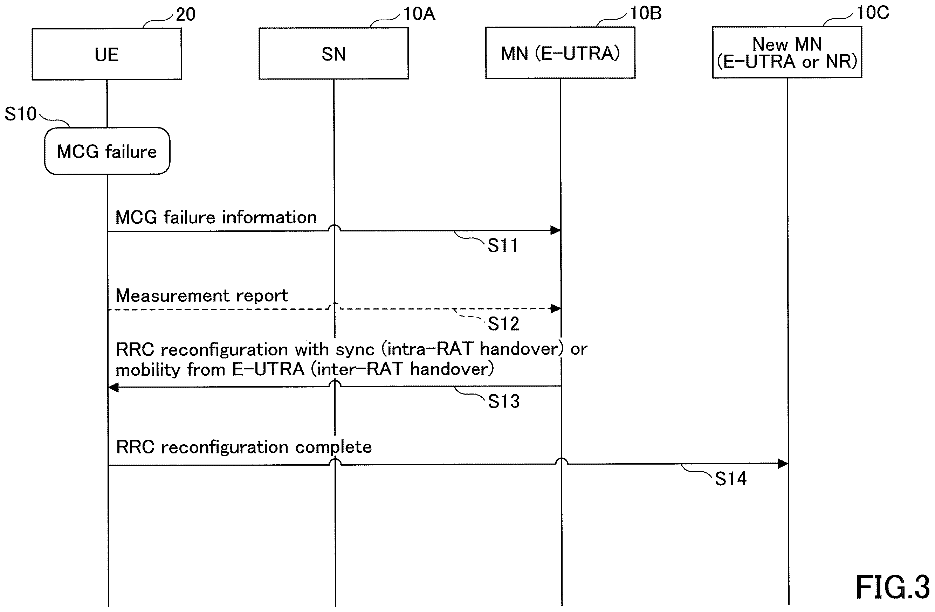

Fig. 3 is a sequence diagram for describing a first operation example (1) in an embodiment of the present invention. A procedure for changing the MN by handover when an MCG failure occurs in the EN-DC will be described with reference to Fig. 3. An SN 10A illustrated in Fig. 3 is a gNB, and an MN 10B is an eNB.

In step S10, the UE 20 detects an MCG failure. Then, the UE 20 transmits the MCG failure information to the MN 10B (S11). In step S12, the UE 20 may transmit a measurement report to the MN 10B. Here, the MCG failure information and the measurement report may be transmitted to the MN 10B via the SN 10A through an SRB1 to which the split SRB is applied or may be transmitted to the MN 10B via the SN 10A through an SRB3.

In step S13, the MN 10B instructs the UE 20 to perform intra-RAT handover by RRC reconfiguration with sync or inter-RAT handover by mobility from E-UTRA (mobility from E-UTRA) based on the MCG failure information. Then, the UE 20 executes the handover and transmits an RRC reconfiguration complete to a new MN 10C of the E-UTRA or the NR (S14).

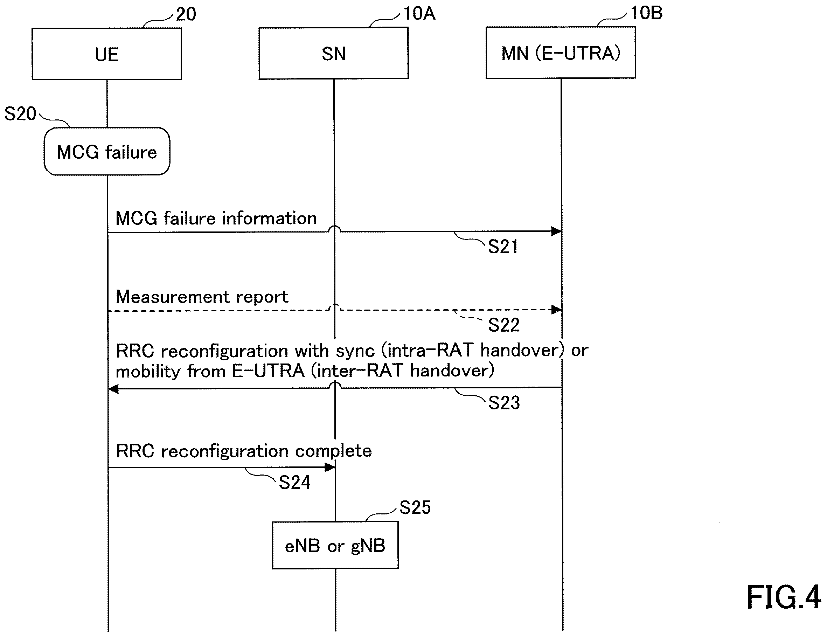

Fig. 4 is a sequence diagram for describing an operation example (2) in an embodiment of the present invention. A procedure for changing the SN to the master node when the MCG failure occurs in the EN-DC will be described with reference to Fig. 4. The SN 10A illustrated in Fig. 4 is a gNB or an eNB, and the MN 10B is an eNB.

In step S20, the UE 20 detects the MCG failure. Then, the UE 20 transmits the MCG failure information to the MN 10B (S21). In step S22, the UE 20 may transmit the measurement report to the MN 10B. Here, similarly to Fig. 3, the MCG failure information and the measurement report may be transmitted to the MN 10B via the SN 10A through the SRB1 to which split SRB is applied or may be transmitted to the MN 10B via the SN 10A through the SRB3.

In step S23, based on the MCG failure information, the MN 10B instructs the UE 20 to perform the intra-RAT handover by the RRC reconfiguration with sync or the inter-RAT handover by the mobility from E-UTRA. Then, the UE 20 transmits the RRC reconfiguration complete to the SN 10A of the E-UTRA or the NR (S24). In step S25, the SN 10A becomes an eNB or a gNB and operates as the MN.

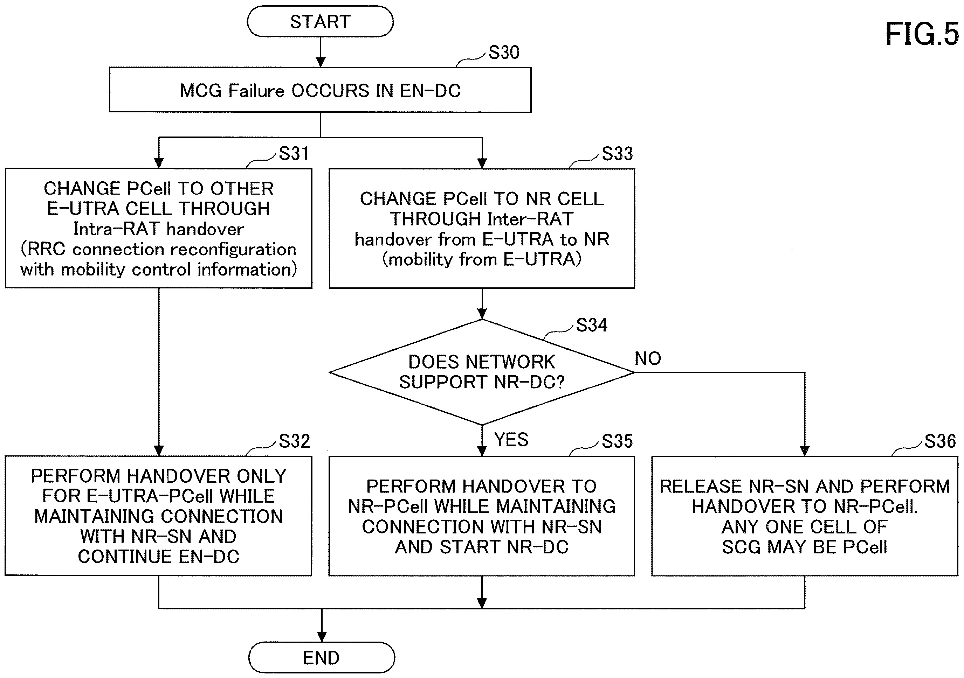

Fig. 5 is a flowchart for describing an operation example (1) in an embodiment of the present invention. A detailed procedure executed when an MCG failure occurs in the EN-DC will be described with reference to Fig. 5.

In step S30, the user equipment 20 detects that an MCG failure has occurred in the EN-DC, and proceeds to step S31 or step S33 in accordance with a communication environment or a measurement result.

In step S31, a primary cell (PCell) is changed to another E-UTRA cell by the intra-RAT handover (RRC connection reconfiguration with mobility control information). Then, the user equipment 20 performs the handover only for the E-UTRA-PCell while maintaining a connection with the NR-SN, and continues the EN-DC (S32).

In step S33, the PCell is changed to an NR cell by the inter-RAT handover (mobility from E-UTRA) from the E-UTRA to the NR. Then, it is determined whether or not the network supports NR-DC (S34). In a case in which the network supports NR-DC (YES in S34), the process proceeds to step S35, and in a case in which the network does not support NR-DC (NO in S34), the process proceeds to step S36. In step S35, the user equipment 20 performs handover to the NR-PCell while maintaining a connection with the NR-SN and starts the NR-DC. On the other hand, in step S36, the user equipment 20 releases the NR-SN and performs the handover to the NR-PCell. Any one cell of the SCG may be a PCell.

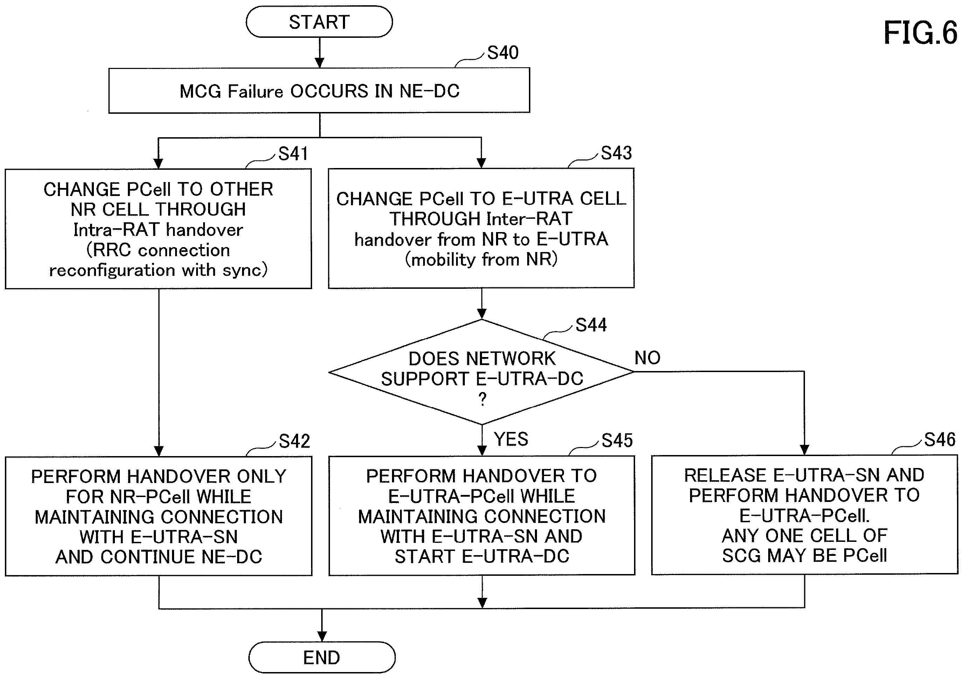

Fig. 6 is a flowchart for describing an operation example (2) in an embodiment of the present invention. A detailed procedure executed when an MCG failure occurs in NE-DC will be described with reference to Fig. 6.

In step S40, the user equipment 20 detects that an MCG failure has occurred in NE-DC, and the process proceeds to step S41 or step S43 in accordance with the communication environment or the measurement result.

In step S41, the PCell is changed to another NR cell by the intra-RAT handover (RRC connection reconfiguration with sync). Then, the user equipment 20 performs the handover only for the NR-PCell while maintaining a connection with the E-UTRA-SN and continues the NE-DC (S42).

In step S43, the PCell is changed to an E-UTRA cell by the inter-RAT handover (mobility from NR) from the NR to the E-UTRA. Then, it is determined whether or not the network supports E-UTRA-DC (S44). In a case in which the network supports E-UTRA-DC (YES in S44), the process proceeds to step S45, and in a case in which the network does not support E-UTRA-DC (NO in S44), the process proceeds to step S46. In step S45, the user equipment 20 performs the handover to the E-UTRA-PCell while maintaining a connection with the E-UTRA-SN, and starts the E-UTRA-DC. On the other hand, in step S46, the user equipment 20 releases the E-UTRA-SN and performs the handover to the NR-PCell. Any one cell of the SCG may be a PCell.

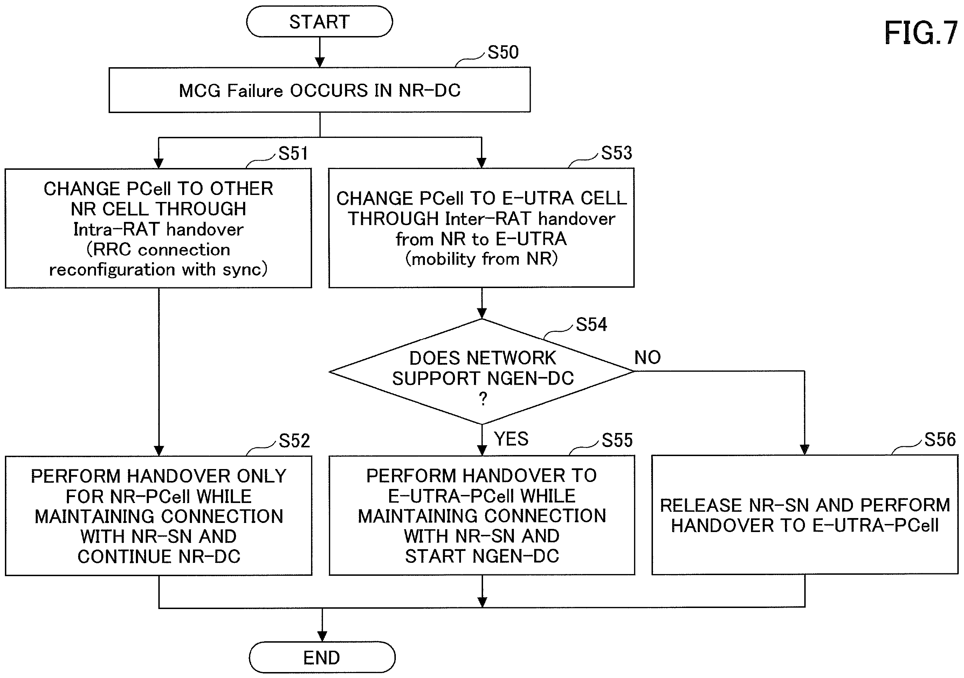

Fig. 7 is a flowchart for describing an operation example (3) in an embodiment of the present invention. A detailed procedure executed when an MCG failure occurs in the NR-DC will be described with reference to Fig. 7.

In step S50, the user equipment 20 detects that an MCG failure has occurred in the NR-DC, and the process proceeds to step S51 or step S53 in accordance with the communication environment or the measurement result.

In step S51, the PCell is changed to another NR cell by the intra-RAT handover (RRC connection reconfiguration with sync). Then, the user equipment 20 performs the handover only for the NR-PCell while maintaining a connection with the NR-SN and continues the NR-DC (S52).

In step S53, the PCell is changed to an E-UTRA cell by the inter-RAT handover (mobility from NR) from the NR to the E-UTRA. Then, it is determined whether or not the network supports NGEN-DC (S54). In a case in which the network supports NGEN-DC (YES at S54), the process proceeds to step S55, and in a case in which the network does not support NGEN-DC (NO at S54), the process proceeds to step S56. In step S55, the user equipment 20 performs the handover to the E-UTRA-PCell while maintaining a connection with the NR-SN and starts the NGEN-DC. On the other hand, in step S56, the user equipment 20 releases the NR-SN and performs the handover to the E-UTRA-PCell.

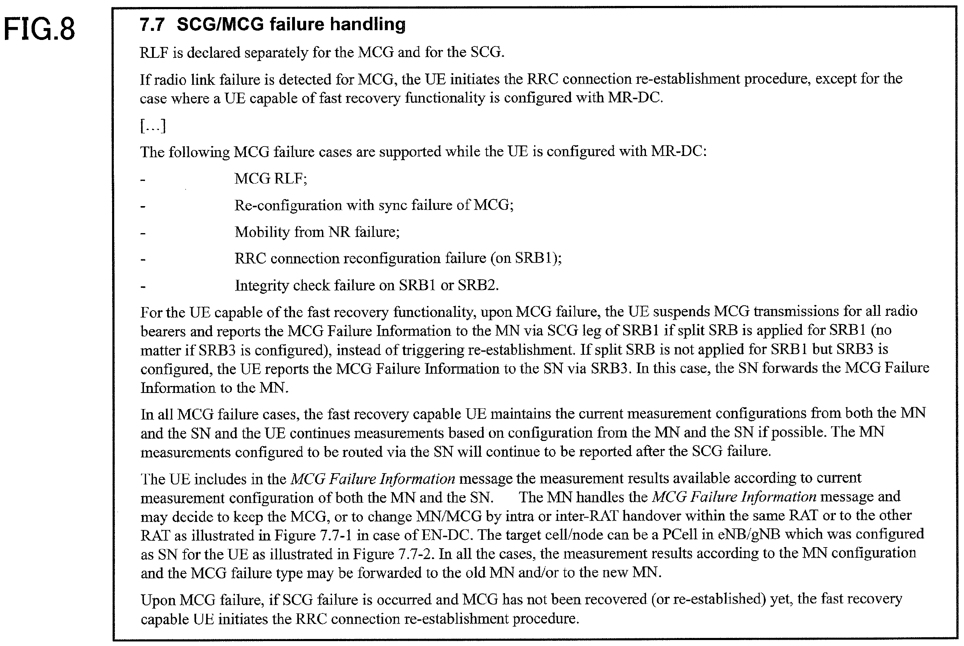

Fig. 8 illustrates a specification change example (1) related to an operation example in an embodiment of the present invention. As illustrated in Fig. 8, an MCG failure is processed. The following cases 1) to 5) are supported for an MCG failure. The MCG failure type may be information indicating one of cases 1) to 5).
1) RLF in an MCG;
2) a synchronization reconfiguration failure of the MCG;
3) a mobility failure from the NR;
4) an RRC connection reconfiguration failure in the SRB1; and
5) an integrity check failure in the SRB1 or the SRB2.

In a case in which an MCG failure occurs, the UE interrupts transmission in the MCG and transmits the MCG failure information "MCG Failure Information" to the MN instead of re-establishing connection. In a case in which the split SRB is applied to the SRB1, the MCG failure information may be transmitted through the SRB1 via the SCG regardless of whether or not the SRB3 is configured. In a case in which the split SRB is not applied to the SRB1, and the SRB3 is configured, the MCG failure information may be transmitted through the SRB3. The SN transfers the MCG failure information to the MN. In a case in which an MCG failure occurs, the user equipment 20 maintains the current measurement settings for both the MN and the SN, and continues the measurement based on the measurement settings if possible. The measurement in the SN is reported via the MN after an SCG failure occurs.

The user equipment 20 includes the measurement result based on the current measurement settings of both the MN and the SN in the MCG failure information message. The MN processes the MCG failure information message and decides whether to maintain, change or release the MN or the MCG. In all the above cases of the MCG failure, the measurement result and the MCG failure type based on the MN configuration may be transferred to an old MN and/or a new MN.

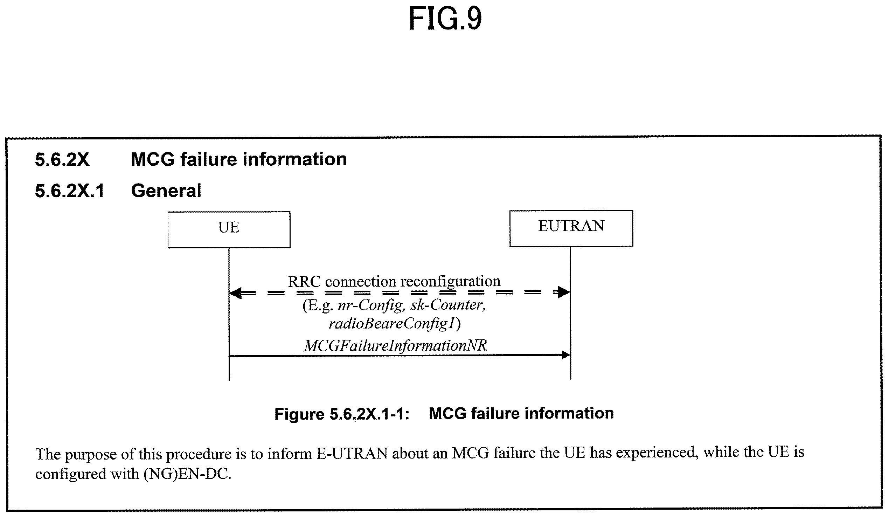

Fig. 9 illustrates a specification change example (2) related to an operation example in an embodiment of the present invention. As illustrated in Fig. 9, the UE may transmit the MCG failure information (MCGFailureInformationNR) to the master node in the E-UTRAN, that is, the EN-DC or the NGEN-DC.

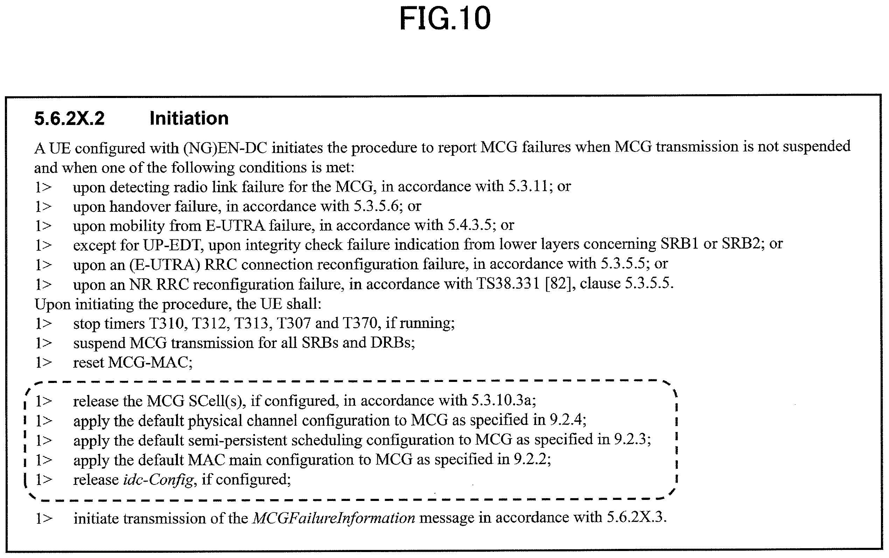

Fig. 10 illustrates a specification change example (3) related to an operation example in an embodiment of the present invention. As illustrated in Fig. 10, the MCG failure information is transmitted. If the procedure for transmitting the MCG failure information is started, the UE 20 stops a predetermined timer and interrupts all transmissions in the MCG. Then, after the MCG-MAC is reset, processes of parts surrounded by a broken line, that is, the following processes 1) to 5) may be executed or may not be executed:
1) releasing a configured MCG SCell;
2) applying a default physical channel configuration to the MCG;
3) applying a default semi-persistent scheduling configuration to the MCG;
4) applying a default MAC main configuration to the MCG; and
5) releasing a configured idc-config, that is, a configuration related to an intra-device interface. Then, the UE 20 starts transmission of the MCG failure information.

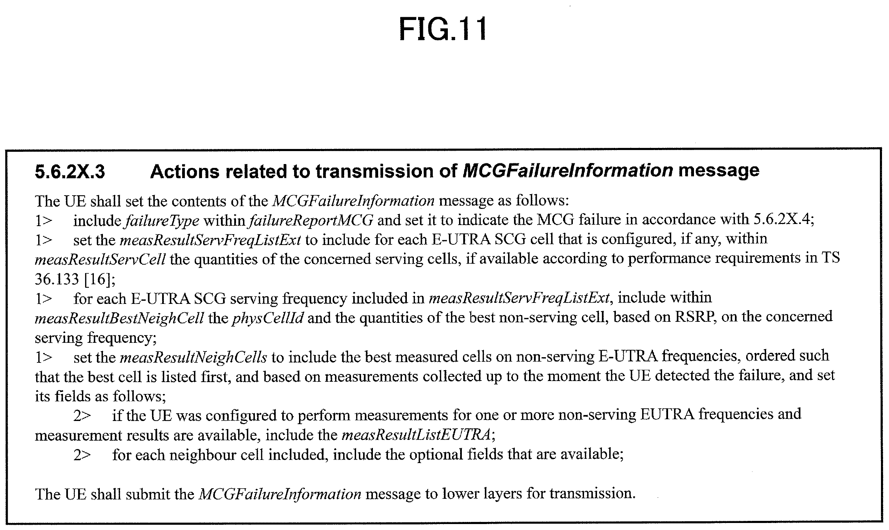

Fig. 11 illustrates a specification change example (4) related to an operation example in an embodiment of the present invention. As illustrated in Fig. 11, the UE 20 sets content of the MCG failure information. For example, the UE 20 includes the failure type (FailureType), the measurement result (measResultBestNeighCell, measResultNeighCells, and measResultListEUTRA) in the MCG failure information.

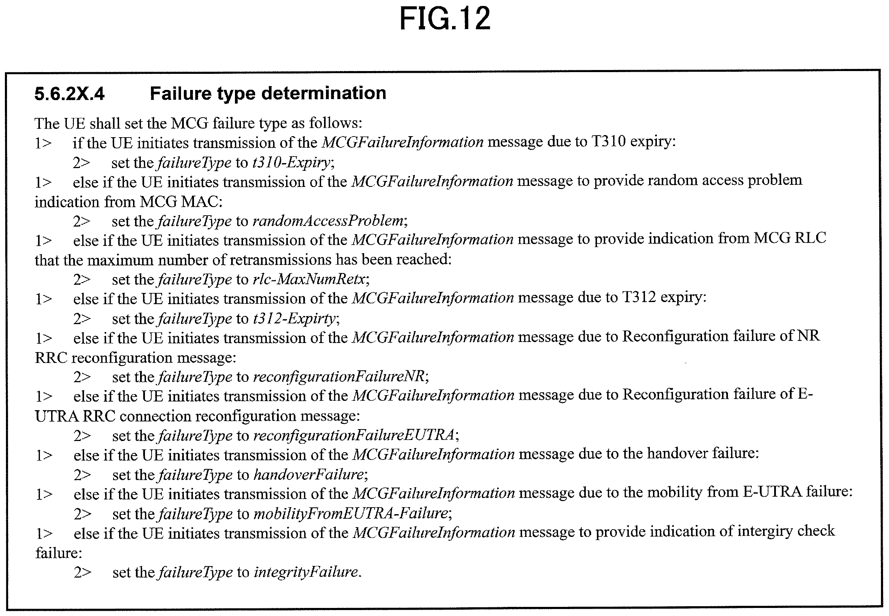

Fig. 12 illustrates a specification change example (5) related to an operation example in an embodiment of the present invention. As illustrated in Fig. 12, the following failure types (FailureType) 1) to 9) may be decided and included in the MCG failure information:
1) the expiry of a timer T310 (T310 is a timer that detects a physical layer failure of the PCell);
2) a random access failure;
3) RLC retransmission count exceeded;
4) the expiry of a timer T312 (T312 is a timer that triggers the measurement report while T310 is operating);
5) an NR RRC reconfiguration failure;
6) an E-UTRA RRC reconfiguration failure;
7) a handover failure;
8) a mobility failure from the E-UTRA; and
9) an integrity check failure.

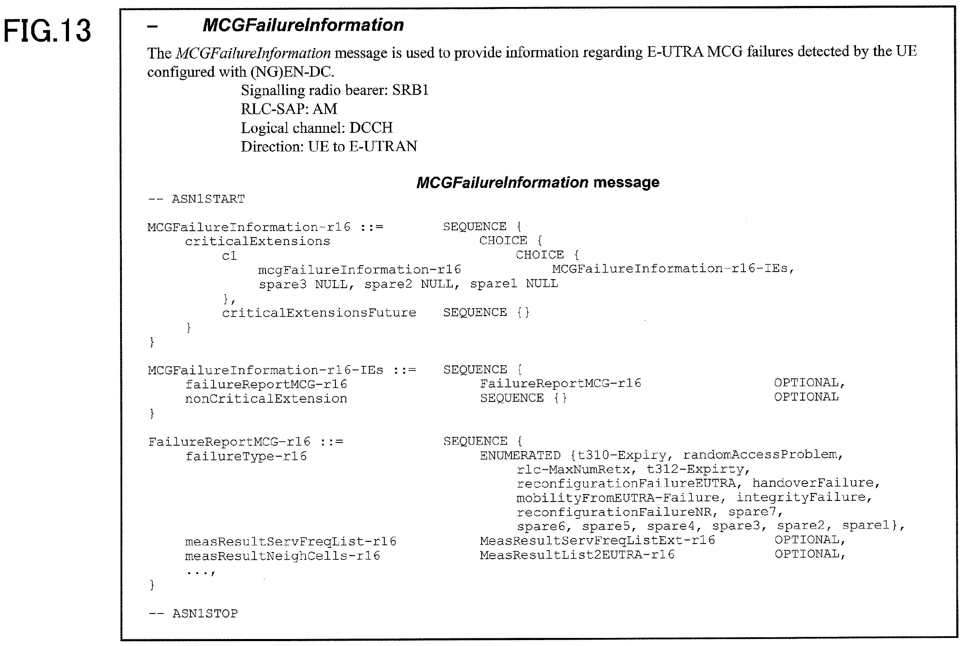

Fig. 13 illustrates a specification change example (6) related to an operation example in an embodiment of the present invention. As illustrated in Fig. 13, an information request of the MCG failure information "MCGFailureInformation" is configured. "MCGFailureInformation" is transmitted from the UE 20 to the E-UTRAN via a signaling radio bearer SRB1.

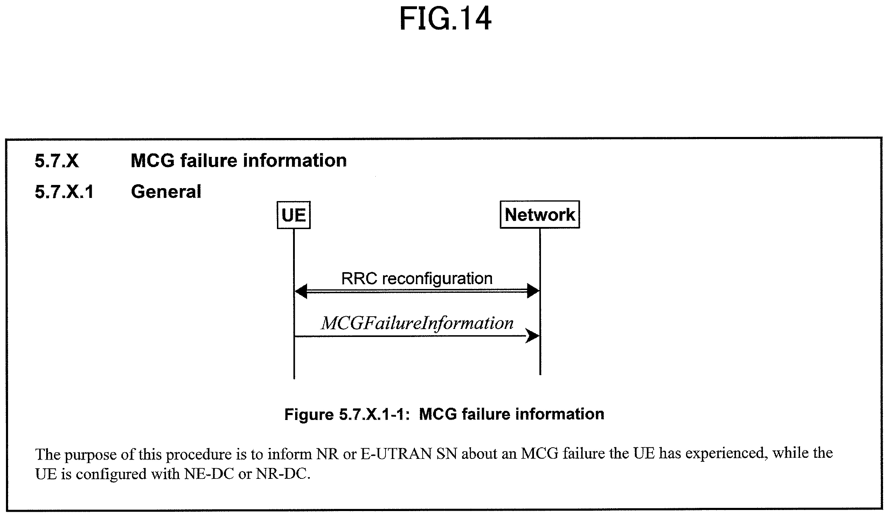

Fig. 14 illustrates a specification change example (7) related to an operation example in an embodiment of the present invention. As illustrated in Fig. 14, the UE may transmit the MCG failure information (MCGFailureInformation) to the master node in the network, that is, NE-DC or NR-DC.

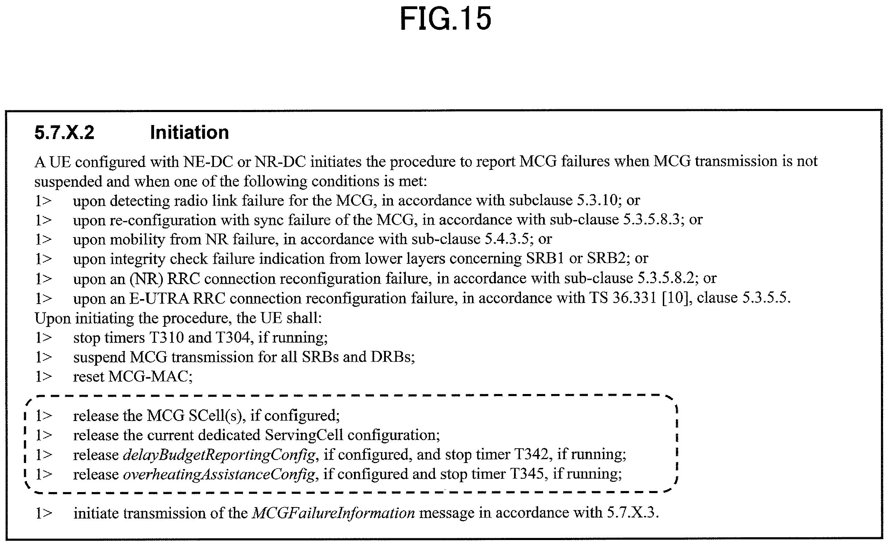

Fig. 15 illustrates a specification change example (8) related to an operation example in an embodiment of the present invention. As illustrated in Fig. 15, the MCG failure information is transmitted. If the procedure for transmitting the MCG failure information is started, the UE 20 stops a predetermined timer and interrupts all transmissions in the MCG. Then, after the MCG-MAC is reset, the following processes 1) to 4) may be executed or may not be executed:
1) releasing a configured MCG SCell;
2) releasing a current individual service cell configuration;
3) releasing a configuration related to a stop timer related to a report delay; and
4) releasing a configuration related to a stop timer related to an assistance information report. Then, the UE 20 starts transmission of the MCG failure information.

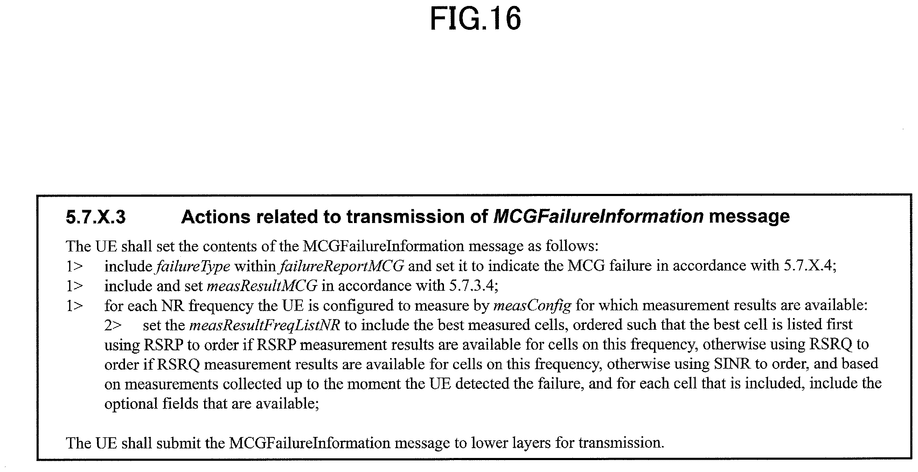

Fig. 16 illustrates a specification change example (9) related to an operation example in an embodiment of the present invention. As illustrated in Fig. 16, the UE 20 sets the content of the MCG failure information. For example, the UE 20 includes the failure type (FailureType) and the measurement result (measResultMCG and measResultFreqListNR) in the MCG failure information.

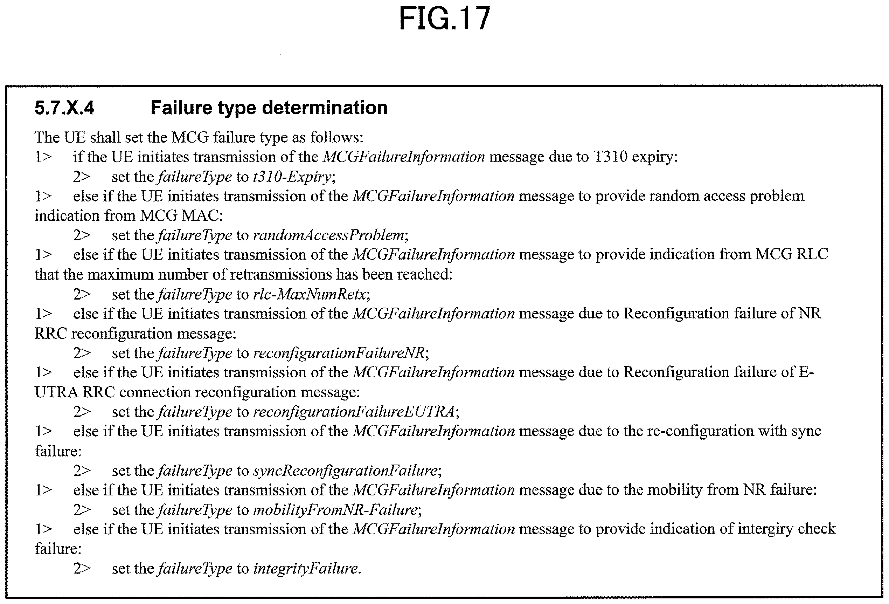

Fig. 17 illustrates a specification change example (10) related to an operation example in an embodiment of the present invention. As illustrated in Fig. 17, the following failure types (FailureType) 1) to 8) may be decided and included in the MCG failure information:
1) the expiry of a timer T310 (T310 is a timer that detects a physical layer failure of the PCell);
2) a random access failure;
3) RLC retransmission count exceeded;
4) an NR RRC reconfiguration failure;
5) an E-UTRA RRC reconfiguration failure;
6) a failure of the RRC reconfiguration with sync;
7) a mobility failure from the NR; and
8) an integrity check failure.

As described above, the failure type when the MCG is NR and the failure type when the MCG illustrated in Fig. 12 is E-UTRA may be different.

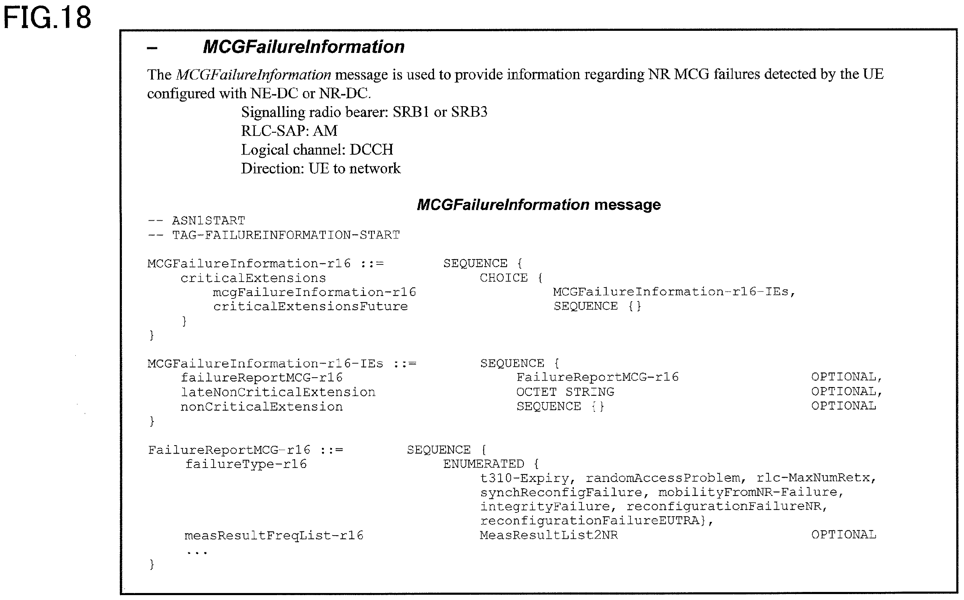

Fig. 18 illustrates a specification change example (11) related to an operation example in an embodiment of the present invention. As illustrated in Fig. 18, an information request of the MCG failure information "MCGFailureInformation" is configured. "MCGFailureInformation" is transmitted from the UE 20 to the network via the signaling radio bearer SRB1 or SRB3.

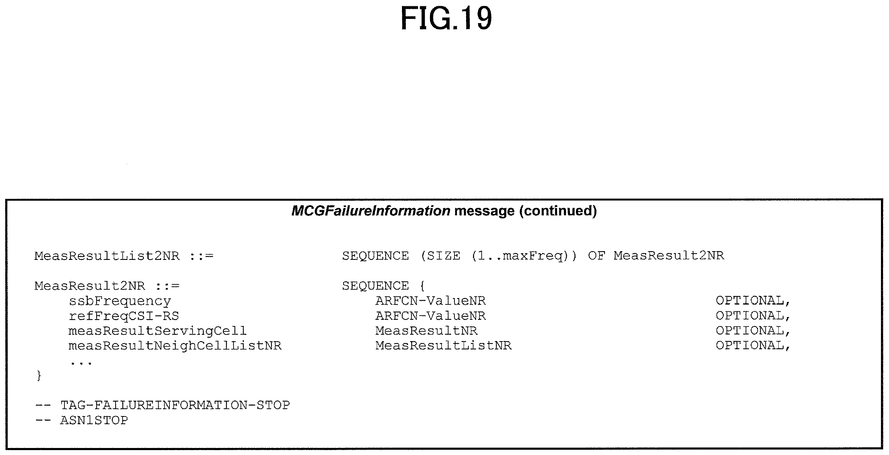

Fig. 19 illustrates a specification change example (12) related to an operation example in an embodiment of the present invention. As illustrated in Fig. 19, an information request "MeasResult2NR" indicating the measurement result is included in the MCG failure information "MCGFailureInformation."

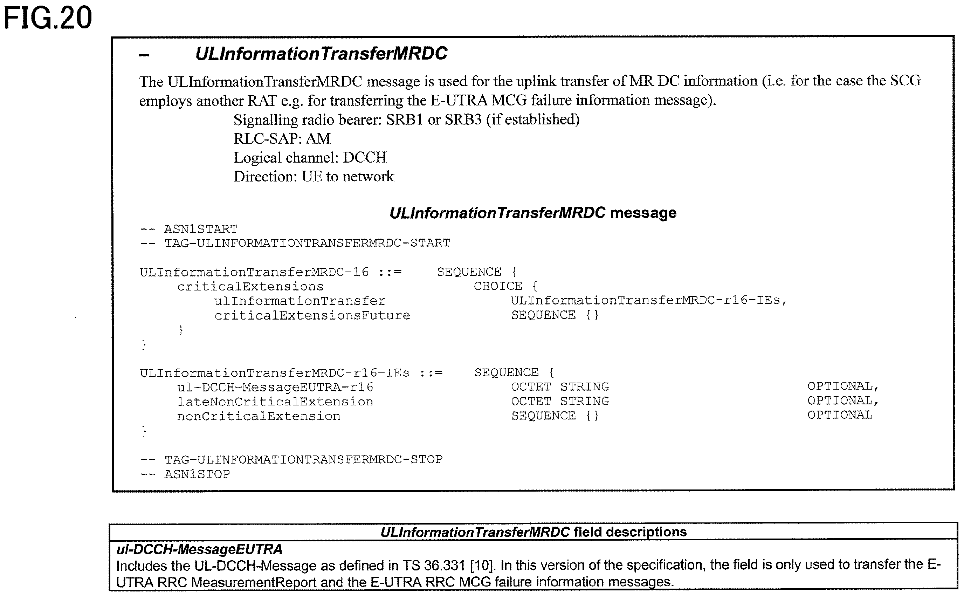

Fig. 20 illustrates a specification change example (13) related to the first operation example in an embodiment of the present invention. As illustrated in Fig. 19, the MCG failure information "MCGFailureInformation" is transmitted to the network via the signaling radio bearer SRB1 or SRB3 in accordance with the information request "ULInformationTransferMRDC" used to transfer information related to the MR-DC.

According to the above embodiment, the user equipment 20 can continue to communicate using SCG even after the MCG failure occurs, and can quickly recover MCG by setting the MN.

In other words, it is possible to recover quickly from a connection failure in dual connectivity executed by the wireless communication system.

### (Device configuration)

Next, function configuration examples of a base station device 10 and a user equipment 20 that execute the processes and the operations described above will be described. The base station device 10 and the user equipment 20 have functions for implementing the embodiments described above. However, each of the base station device 10 and the user equipment 20 may have only some of the functions in the embodiment.

### <Base station device 10>

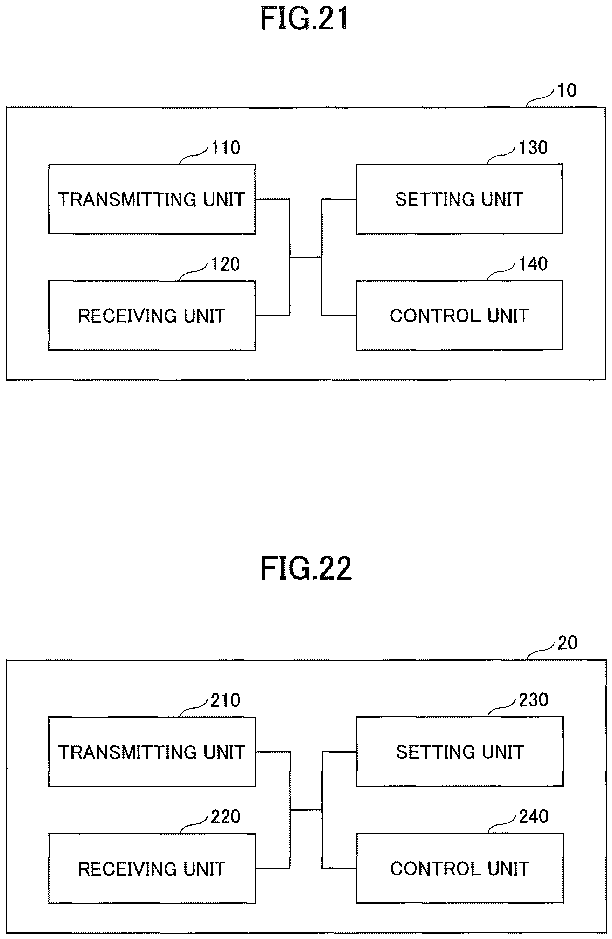

Fig. 21 is a diagram illustrating an example of a functional configuration of the base station device 10 in an embodiment of the present invention. As illustrated in Fig. 21, the base station device 10 includes a transmitting unit 110, a receiving unit 120, a setting unit 130, and a control unit 140. The functional configuration illustrated in Fig. 21 is only an example. A functional classification and names of the functional unit may be any classification and any names as long as the operation according to an embodiment of the present invention can be executed.

The transmitting unit 110 includes a function of generating a signal to be transmitted to the user equipment 20 side and transmitting the signal wirelessly. Further, the transmitting unit 110 transmits an inter-network node message to other network nodes. The receiving unit 120 includes a function of receiving various kinds of signals transmitted from the user equipment 20 and acquiring, for example, higher layer information from the received signals. Further, the transmitting unit 110 includes a function of transmitting NR-PSS, NR-SSS, NR-PBCH, and DL/UL control signals or the like to the user equipment 20. Also, the receiving unit 120 receives the inter-network node message from other network nodes.

The setting unit 130 stores configuration information configured in advance and various kinds of configuration information to be transmitted to the user equipment 20. For example, content of the configuration information is information used for setting the dual connectivity.

As described in the embodiment, the control unit 140 performs control related to dual connectivity and control related to connection recovery processing. The functional unit related to signal transmission in the control unit 140 may be included in the transmitting unit 110, and the functional unit related to signal reception in the control unit 140 may be included in the receiving unit 120.

### <User equipment 20>

Fig. 22 is a diagram illustrating an example of a functional configuration of the user equipment 20 in an embodiment of the present invention. As illustrated in Fig. 22, the user equipment 20 includes a transmitting unit 210, a receiving unit 220, a setting unit 230, and a control unit 240. The functional configuration illustrated in Fig. 22 is only an example. A functional classification and names of the functional unit may be any classification and any names as long as the operation according to an embodiment of the present invention can be executed.

The transmitting unit 210 generates a transmission signal from transmission data and transmits the transmission signal wirelessly. The receiving unit 220 wirelessly receives various kinds of signals and acquires higher layer signals from received physical layer signals. The receiving unit 220 includes a function of receiving NR-PSS, NR-SSS, NR-PBCH, and DL/UL/SL control signals or the like transmitted from the base station device 10. Further, for example, the transmitting unit 210 transmits a physical sidelink control channel (PSCCH), a physical sidelink shared channel (PSSCH), a physical sidelink discovery channel (PSDCH), a physical sidelink broadcast channel (PSBCH), and the like to other user equipment 20 as D2D communication, and the receiving unit 120 receives PSCCH, PSSCH, PSDCH, PSBCH, and the like from other user equipment 20.

The setting unit 230 stores various kinds of configuration information received from the base station device 10 by the receiving unit 220. The setting unit 230 also stores configuration information configured in advance. For example, content of the configuration information is information related to a configuration for executing the dual connectivity.

As described in the embodiment, the control unit 240 performs control related to the dual connectivity and control related to connection recovery processing in the user equipment 20. The functional unit related to signal transmission in the control unit 240 may be included in the transmitting unit 210, and the functional unit related to signal reception in the control unit 240 may be included in the receiving unit 220.

### (Hardware configuration)

In the block diagrams (Figs. 21 and 22) used for the description of the embodiment, the blocks of the functional units are illustrated. The functional blocks (configuring units) are implemented by an arbitrary combination of hardware and/or software. A device of implementing each functional block is not particularly limited. In other words, each functional block may be implemented by one device which is physically or logically combined or may be implemented by a plurality of devices, that is, two or more devices which are physically and/or logically separated and are directly or indirectly connected (for example, a wired and/or wireless manner). The functional block may be implemented by combining software with the one device or the plurality of devices.

The functions include determining, deciding, judging, computing, calculating, processing, deriving, investigating, searching, confirming, receiving, transmitting, outputting, accessing, resolving, selecting, choosing, establishing, comparing, assuming, expectation, regarding, broadcasting, notifying, communicating, forwarding, configuring, reconfiguring, allocating, mapping, assigning, and the like but are not limited thereto. For example, a functional block (configuring unit) that causes transmission to function is referred to as a transmitting unit or a transmitter. In any case, as described above, an implementation method is not particularly limited.

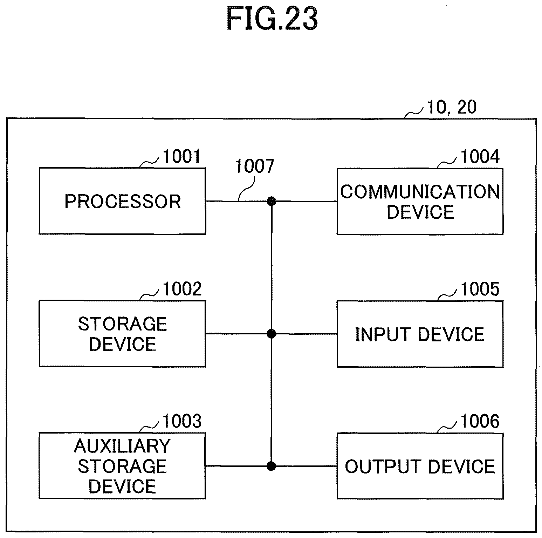

For example, the base station device 10, the user equipment 20, or the like in one embodiment of the present disclosure may function as a computer for processing the present disclosure's wireless communication method. Fig. 23 is a diagram illustrating an example of a hardware configuration of the base station device 10 and the user equipment 20 according to an embodiment of the present disclosure. Each of the base station device 10 and the user equipment 20 may be physically configured as a computer device including a processor 1001, a storage device 1002, an auxiliary storage device 1003, a communication device 1004, an input device 1005, an output device 1006, a bus 1007, and the like.

In the following description, the term "device" can be read as a circuit, device, unit, or the like. The hardware configuration of each of the base station device 10 and the user equipment 20 may be configured to include one or more devices illustrated in the drawing or may be configured without including some devices.

Each function in each of the base station device 10 and the user equipment 20 is implemented such that predetermined software (program) is read on hardware such as the processor 1001 and the storage device 1002, and the processor 1001 performs an operation and controls communication by the communication device 1004 and reading and/or writing of data in the storage device 1002 and the auxiliary storage device 1003.

For example, the processor 1001 operates an operating system and controls the entire computer. The processor 1001 may be configured with a central processing unit (CPU) including an interface with a peripheral device, a control device, an operation device, a register, and the like. For example, the control unit 140, the control unit 240, and the like described above may be implemented by the processor 1001.

Further, the processor 1001 reads a program (program code), a software module, or data from at least one of the auxiliary storage device 1003 and/or the communication device 1004 out to the storage device 1002, and executes various types of processes according to them. A program causing a computer to execute at least some of the operations described in the above embodiment is used as the program. For example, the control unit 140 of the base station device 10 illustrated in Fig. 21 may be implemented by a control program which is stored in the storage device 1002 and operates on the processor 1001. Further, for example, the control unit 240 of the user equipment 20 illustrated in Fig. 22 may be implemented by a control program which is stored in the storage device 1002 and operates on the processor 1001. Various types of processes have been described as being performed by one processor 1001 but may be performed simultaneously or sequentially by two or more processors 1001. The processor 1001 may be implemented by one or more chips. The program may be transmitted from a network via an electric communication line.

The storage device 1002 is a computer readable recording medium and configured with at least one of a read only memory (ROM), an erasable programmable ROM (EPROM), an electrically erasable programmable ROM (EEPROM), a random access memory (RAM), and the like. The storage device 1002 is also referred to as a "register," a "cache," a "main memory," or the like. The storage device 1002 can store programs (program codes), software modules, or the like which are executable for carrying out the communication method according to an embodiment of the present disclosure.

The auxiliary storage device 1003 is a computer-readable recording medium and may be configured with, for example, at least one of an optical disk such as a compact disc ROM (CD-ROM), a hard disk drive, a flexible disk, a magneto-optical disk (for example, a compact disk, a digital versatile disk, or a Blu-ray (registered trademark) disc, a smart card, a flash memory (for example, a card, a stick, or a key drive), a floppy (registered trademark) disk, a magnetic strip, and the like. The storage medium may be, for example, a database, a server, or any other appropriate medium including at least one of the storage device 1002 and the auxiliary storage device 1003.

The communication device 1004 is hardware (a transceiving device) for performing communication between computers via at least one of a wired network and a wireless network and is also referred to as a "network device," a "network controller," a "network card," a "communication module," or the like. The communication device 1004 may include a high-frequency switch, a duplexer, a filter, a frequency synthesizer, or the like in order to implement at least one of frequency division duplex (FDD) and time division duplex (TDD). For example, a transceiving antenna, an amplifying unit, a transmitting/receiving unit, a transmission line interface, or the like may be implemented by the communication device 1004. The transmitting/receiving unit may be implemented by to be physically or logically separated by a transmitting unit and a receiving unit.

The input device 1005 is an input device (for example, a keyboard, a mouse, a microphone, a switch, a button, a sensor, or the like) that receives an input from the outside. The output device 1006 is an output device (for example, a display, a speaker, an LED lamp, or the like) that performs output to the outside. The input device 1005 and the output device 1006 may be integrated (for example, a touch panel).

The respective devices such as the processor 1001 and the storage device 1002 are connected via the bus 1007 to communicate information with each other. The bus 1007 may be configured with a single bus or may be configured with different buses between the devices.

Further, each of the base station device 10 and the user equipment 20 may be configured to include hardware such as a microprocessor, a digital signal processor (DSP), an application specific integrated circuit (ASIC), a programmable logic device (PLD), or a field programmable gate array (FPGA) or all or some of the functional blocks may be implemented by hardware. For example, the processor 1001 may be implemented using at least one of these pieces of hardware.

### (Conclusion of embodiment)

As described above, according to an embodiment of the present invention, a user equipment including a communication unit that performs communication to which dual connectivity configured by a master cell group and a secondary cell group is applied, a control unit that detects an occurrence of a failure in the master cell group, and a transmitting unit that transmits information related to the occurrence of the failure in the master cell group to a master node of the master cell group, in which, in a state in which the communication unit continues a connection with a secondary node of the secondary cell group, the control unit changes a primary cell to another cell by handover in the same radio access technology (RAT), is provided.

With the above configuration, the user equipment 20 can continue communication using the SCG even after the MCG failure occurs and quickly recover the MCG by configuring the MN. In other words, it is possible to recover quickly from a connection failure in the dual connectivity executed by the wireless communication system.

The transmitting unit may transmit the information related to the occurrence of the failure in the master cell group to the master node via the secondary node via a split signaling radio bearer. With this configuration, the user equipment 20 can transmit the MCG failure information to the master node via the secondary node.

The transmitting unit may transmit the information related to the occurrence of the failure in the master cell group to the master node via the secondary node via a signaling radio bearer configured in the secondary node. With this configuration, the user equipment 20 can transmit the MCG failure information to the master node via the secondary node.

The transmitting unit may include measurement results in the master cell group and the secondary cell group in the information related to the occurrence of the failure in the master cell group and transmit the information including the measurement results. With this configuration, the master node can quickly recover the MCG failure since the user equipment 20 transmits the MCG failure information including the measurement results to the master node.

The dual connectivity may be any one of EN-DC, NE-DC, and NR-DC, and a failure type included in the information related to the occurrence of the failure in the master cell group may differ between: the EN-DC; and the NE-DC and the NR-DC. With this configuration, the user equipment 20 can report the failure type corresponding to the RAT to the master node.

Further, according to an embodiment of the present invention, provided is a base station device including a communication unit that performs communication to which dual connectivity configured by a master cell group and a secondary cell group is applied, a receiving unit that receives information related to an occurrence of a failure in the master cell group from a user equipment, and a control unit that decides whether to maintain, change, or release the master cell group based on the information related to the occurrence of the failure in the master cell group, in which, in a state in which the communication unit continues a connection with a secondary node of the secondary cell group, the control unit causes the user equipment to change a primary cell to another cell by handover in the same radio access technology (RAT).

With the above configuration, the user equipment 20 can continue communication using the SCG even after the MCG failure occurs and quickly recover the MCG by configuring the MN. In other words, it is possible to recover quickly from a connection failure in the dual connectivity executed by the wireless communication system.

### (Supplement of embodiment)

The exemplary embodiment of the present invention has been described above, but the disclosed invention is not limited to the above embodiments, and those skilled in the art would understand various modified examples, revised examples, alternative examples, substitution examples, and the like. In order to facilitate understanding of the invention, specific numerical value examples have been used for description, but the numerical values are merely examples, and certain suitable values may be used unless otherwise stated. The classification of items in the above description is not essential to the present invention, matters described in two or more items may be combined and used if necessary, and a matter described in one item may be applied to a matter described in another item (unless inconsistent). The boundary between functional units or processing units in a functional block diagram does not necessarily correspond to the boundary between physical parts. Operations of a plurality of functional units may be performed physically by one component, or an operation of one functional unit may be physically performed by a plurality of parts. In the processing procedure described in the embodiments, the order of the processes may be changed as long as there is no inconsistency. For the sake of convenience of processing description, the base station device 10 and the user equipment 20 have been described using the functional block diagrams, but such devices may be implemented by hardware, software, or a combination thereof. Software executed by the processor included in the base station device 10According to the embodiment of the present invention and software executed by the processor included in the user equipment 20According to the embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate storage medium.

Further, an indication of information is not limited to the aspect or embodiment described in the present disclosure and may be given by any other method. For example, the indication of information may be given by physical layer signaling (for example, downlink control information (DCI) or uplink control information (UCI)), upper layer signaling (for example, radio resource control (RRC) signaling, medium access control (MAC) signaling, broadcast information (master information block (MIB), system information block (SIB))), other signals, or a combination thereof. Further, the RRC signaling may be referred to as an RRC message and may be, for example, an RRC connection setup message, an RRC connection reconfiguration message, or the like.

Each aspect and embodiment of the present invention may be applied to at least one of Long Term Evolution (LTE), LTE-advanced (LTE-A), SUPER 3G, IMT-advanced, 4th generation mobile communication system (4G), 5th generation mobile communication system (5G), Future Radio Access (FRA), New Radio (NR), W-CDMA (registered trademark), GSM (registered trademark), CDMA 2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using any other appropriate system, and next generation systems extended based on these standards. Further, a plurality of systems may be combined and applied (for example, a combination of at least one of LTE and LTE-A and 5G or the like).

The processing procedures, the sequences, the flowcharts, and the like of the respective aspects/embodiments described in this specification may be reversed in order unless there is a contradiction. For example, the method described in the present disclosure presents elements of various steps using an exemplary order and is not limited to a presented specific order.

In this specification, a specific action that is supposed to be performed by the base station device 10 may be performed by an upper node in some cases. In the network including one or more network nodes including the base station device 10, various operations performed for communication with the user equipment 20 can be obviously performed by at least one of the base station and any network node (for example, an MME, an S-GW, or the like is considered, but it is not limited thereto) other than the base station device 10 and/or the base station device 10. The example in which the number of network nodes excluding the base station device 10 is one has been described above, but other network nodes in which a plurality of other network nodes (for example, an MME and an S-GW) are combined may be provided.

Information, a signal, or the like described in the present disclosure may be output from an upper layer (or a lower layer) to a lower layer (or an upper layer). Information, a signal, or the like described in the present disclosure may be input and output via a plurality of network nodes.

Input and output information and the like may be stored in a specific place (for example, a memory) or may be managed through a management table. Input and output information and the like may be overwritten, updated, or additionally written. Output information and the like may be deleted. Input information and the like may be transmitted to another device.

The determination the present disclosure may be performed in accordance with a value (0 or 1) indicated by one bit, may be performed in accordance with a Boolean value (true or false), or may be performed by a comparison of numerical values (for example, a comparison with a predetermined value).

Software can be interpreted widely to mean a command, a command set, a code, a code segment, a program code, a program, a subprogram, a software module, an application, a software application, a software package, a routine, a subroutine, an object, an executable file, an execution thread, a procedure, a function, and the like regardless of whether software is called software, firmware, middleware, a microcode, a hardware description language, or any other name.

Further, software, commands, information, and the like may be transmitted and received via a transmission medium. For example, when software is transmitted from a web site, a server, or any other remote source using at least one of a wired technology (such as a coaxial cable, a fiber optic cable, a twisted pair, or a digital subscriber line (DSL)) and a radio technology (such as infrared rays or a microwave), at least one of the wired technology and the radio technology are included in a definition of a transmission medium.

Information, signals, and the like described in this specification may be indicated using any one of a variety of different techniques. For example, data, instructions, commands, information, signals, bits, symbols, chips, and the like which are mentioned throughout the above description may be indicated by voltages, currents, electromagnetic waves, magnetic particles, optical fields or photons, or an arbitrary combination thereof.

The terms described in the present disclosure and terms necessary for understanding the present disclosure may be replaced with terms having the same or similar meanings. For example, at least one of a channel and a symbol may be a signal. Further, a signal may be a message. Further, a component carrier (CC) may be referred to as a "carrier frequency," a "cell," or the like.

The terms "system" and "network" used in the present disclosure are used interchangeably.

Further, information, parameters, and the like described in the present disclosure may be indicated by absolute values, may be indicated by relative values from predetermined values, or may be indicated by corresponding other information. For example, radio resources may be those indicated by an index.

The names used for the above-described parameters are not limited in any respect. Further, mathematical formulas or the like using the parameters may be different from those explicitly disclosed in the present disclosure. Since various channels (for example, a PUCCH, a PDCCH, and the like) and information elements can be identified by suitable names, various names allocated to the various channels and the information elements are not limited in any respect.

In the present disclosure, the terms "base station (BS)," "radio base station," "base station device," "fixed station," "Node B," "eNode B (eNB) gNodeB (gNB)," "access point," "transmission point," "reception point," "transmission/reception point," "cell," "sector," "cell group," "carrier," "component carrier," and the like can be used interchangeably. The base stations may also be indicated by terms such as a macro cell, a small cell, a femtocell, and a picocell.

The base station eNB can accommodate one or more (for example, three) cells. In a case in which the base station accommodates a plurality of cells, the entire coverage area of the base station can be partitioned into a plurality of small areas, and each small area can provide a communication service through a base station subsystem (for example, a small indoor base station (a remote radio head (RRH)). The term "cell" or "sector" refers to the whole or a part of the coverage area of at least one of the base station and the base station subsystem that performs a communication service in the coverage.

In the present disclosure, the terms "mobile station (MS)," "user terminal," "user equipment (UE)," "terminal," and the like can be used interchangeably.

The mobile station may be a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, It may also be referred to as a remote terminal, handset, user agent, mobile client, client, or some other suitable term.

At least one of the base station and the mobile station may be also referred to as a transmitting device, a receiving device, a communication device, or the like. At least one of the base station and the mobile station may be a device installed in a mobile body, a mobile body itself, or the like. The moving body may be a vehicle (for example, a car, an airplane, or the like), a moving body that moves unmanned (for example, a drone, an autonomous car or the like), or a robot (manned type or unmanned type). At least one of the base station and the mobile station includes a device which need not necessarily move during a communication operation. For example, at least one of the base station and the mobile station may be an Internet of things (IoT) device such as a sensor.

Further, the base station in the present disclosure may be replaced with a user terminal. For example, each aspect/embodiment of the present disclosure may be applied to a configuration in which communication between the base station and the user terminal is replaced with communication between a plurality of user equipment 20 (for example, which may be referred to as device-to-device (D2D) or vehicle-to-everything (V2X)). In this case, the user equipment 20 may have the functions of the base station device 10 described above. Further, the terms "uplink" and "downlink" may be replaced with terms (for example, "side") corresponding to inter-terminal communication. For example, an uplink channel, a downlink channel, or the like may be read with side channels.

Similarly, the user terminal in the present disclosure may be replaced with the base station. In this case, the base station may have the functions of the above-mentioned user terminal.

The terms "determining" and "deciding" used in this specification may include a wide variety of actions. For example, "determining" and "deciding" may include, for example, events in which events such as judging, calculating, computing, processing, deriving, investigating, looking up, search, and inquiry (for example, looking up in a table, a database, or another data structure), or ascertaining are regarded as "determining" or "deciding." Further, "determining" and "deciding" may include, for example, events in which events such as receiving (for example, receiving information), transmitting (for example, transmitting information), input, output, or accessing (for example, accessing data in a memory) are regarded as "determining" or "deciding." Further, "determining" and "deciding" may include, for example, events in which events such as resolving, selecting, choosing, establishing, or comparing are regarded as "determining" or "deciding." In other words, "determining" and "deciding" may include events in which a certain operation is regarded as "determining" or "deciding." Further, "determining (deciding)" may be replaced with "assuming," "expecting," "considering," or the like.

Terms "connected," "coupled," or variations thereof means any direct or indirect connection or coupling between two or more elements and may include the presence of one or more intermediate elements between two elements which are "connected" or "coupled." The coupling or the connection between the elements may be physical, logical, or a combination thereof. For example, "connection" may be replaced with "access." In a case in which used in the present disclosure, two elements may be considered to be "connected" or "coupled" with each other using at least one of one or more electric wires, cables and/or a printed electrical connection or using electromagnetic energy having a wavelength in a radio frequency domain, a microwave region, or an light (both visible and invisible) region as non-limiting and non-exhaustive examples.

A reference signal may be abbreviated as RS and may be referred to as a pilot, depending on a standard to be applied.

A phrase "based on" used in the present disclosure is not limited to "based on only" unless otherwise stated. In other words, a phrase "based on" means both "based on only" and "based on at least."

Any reference to an element using a designation such as "first," "second," or the like used in the present disclosure does not generally restrict quantities or an order of those elements. Such designations can be used in the present disclosure as a convenient method of distinguishing two or more elements. Thus, reference to the first and second elements does not mean that only two elements can be adopted there, or the first element must precede the second element in a certain form.

Further, "means" in the configuration of each of the above devices may be replaced with "unit," "circuit," "device," or the like.

In a case in which "include," "including," and variations thereof are used in the present disclosure, these terms are intended to be comprehensive, similarly to a term "comprising." Further, the term "or" used in the present disclosure is intended not to be an exclusive disjunction.

A radio frame may include one or more frames in the time domain. In the time domain, each of one or more frames may be referred to as a sub frame. The sub frame may further include one or more slots in the time domain. The sub frame may have a fixed time length (for example, 1 ms) not depending on numerology.

The numerology may be a communication parameter applied to at least one of transmission and reception of a certain signal or channel. For example, the numerology may indicate at least one of a sub carrier spacing (SCS), a bandwidth, a symbol length, a cyclic prefix length, a transmission time interval (TTI), a number of symbols per TTI, a radio frame configuration, a specific filtering process performed in the frequency domain by a transceiver, a specific windowing process performed in the time domain by a transceiver, and the like.

The slot may include one or more symbols (orthogonal frequency division multiplexing (OFDM) symbols, single carrier frequency division multiple access (SC-FDMA) symbols, or the like) in the time domain. The slot may be a time unit based on the numerology.

The slot may include a plurality of mini slots. Each mini slot may include one or more symbols in the time domain. Further, the mini slot may be referred to as a sub-slot. The mini slot may include fewer symbols than a slot. A PDSCH (or PUSCH) transmitted in units of times greater than the mini slot may be referred to as a PDSCH (or PUSCH) mapping type A. A PDSCH (or PUSCH) transmitted using a mini slot may be referred to as a PDSCH (or PUSCH) mapping type B.

All of a radio frame, a sub frame, a slot, a mini slot, and a symbol indicates a time unit for transmitting a signal. As a radio frame, a sub frame, a slot, a mini slot, and a symbol, different designations respectively corresponding to them may be used.

For example, one sub frame may be referred to as a transmission time interval (TTI: Transmission Time Interval), or a plurality of consecutive sub frames may be referred to as TTIs, or one slot or one mini slot may be referred to as a TTI. In other words, at least one of the sub frame and the TTI may be a sub frame (1 ms) in the existing LTE, may be a period shorter than 1 ms (for example, 1 to 13 symbols), or may be referred to as a period longer than 1 ms. A unit representing the TTI may be referred to as slot, a mini slot, or the like instead of the sub frame.

Here, for example, the TTI refers to a minimum time unit of scheduling in wireless communication. For example, in the LTE system, the base station performs scheduling of allocating a radio resource (a frequency bandwidth, a transmission power, or the like which can be used in each user equipment 20) to each user equipment 20 in units of TTIs. The definition of the TTI is not limited thereto.

The TTI may be a transmission time unit such as a channel coded data packet (transport block), a code block, or a code word, or may be a processing unit such as scheduling or link adaptation. Further, when a TTI is given, a time interval (for example, the number of symbols) in which a transport block, a code block, a code word, or the like is actually mapped may be shorter than the TTI.

Further, when one slot or one mini slot is referred to as a TTI, one or more TTIs (that is, one or more slots or one or more mini slots) may be a minimum time unit of scheduling. Further, the number of slots (the number of mini slots) constituting the minimum time unit of scheduling may be controlled.

A TTI having a time length of 1 ms may be referred to as a common TTI (TTI in LTE Rel. 8 to 12), a normal TTI, a long TTI, a common sub frame, a normal sub frame, a long sub frame, a slot, or the like. A TTI shorter than the common TTI may be referred to as a reduced TTI, a short TTI, a partial TTI (a partial or fractional TTI), a reduced sub frame, a short sub frame, a mini slot, a sub slot, a slot, or the like.

Further, a long TTI (for example, a common TTI, a sub frame, or the like) may be replaced with a TTI having a time length exceeding 1 ms, and a short TTI (for example, a reduced TTI or the like) may be replaced with a TTI having a TTI length which is less than a TTI length of a long TTI and equal to or more than 1 ms.

The resource block (RB) is a resource allocation unit in the time domain and the frequency domain and may include one or more consecutive subcarriers in the frequency domain. The number of sub carriers included in an RB may be the same irrespective of a numerology and may be, for example, 12. The number of sub carriers included in an RB may be decided based on a numerology.

Further, a time domain of an RB may include one or more symbols and may be a length of one slot, one mini slot, one sub frame, or one TTI. Each of one TTI, one sub frame, or the like may be constituted by one or more resource blocks.

Further, one or more RBs may be referred to as a physical resource block (PRB), a sub carrier group (SCG), a resource element group (REG), a PRB pair, an RB pair, or the like.

Further, the resource block may be constituted by one or more resource elements (RE). For example, one RE may be a radio resource region of one subcarrier and one symbol.

A bandwidth part (BWP) (which may be referred to as a partial bandwidth) may indicate a subset of consecutive common resource blocks (RBs) for a certain numerology in a certain carrier. Here, a common RB may be specified by an index of an RB based on a common reference point of a carrier. A PRB may be defined in a BWP and numbered in a BWP.

The BWP may include a BWP for UL (UL BWP) and a BWP for DL (DL BWP). In a UE, one or more BWPs may be configured within one carrier.

At least one of configured BWPs may be active, and it may not be assumed that the UE transmits and receives a predetermined signal/channel outside an active BWP. Further, a "cell," a "carrier," or the like in the present disclosure may be replaced with a "BWP."

Structures of the radio frame, the sub frame, slot, the mini slot, and the symbol are merely examples. For example, configurations such as the number of sub frames included in a radio frame, the number of slots per sub frame or radio frame, the number of mini slots included in a slot, the number of symbols and RBs included in a slot or a mini slot, the number of sub carriers included in an RB, the number of symbols in a TTI, a symbol length, a cyclic prefix (CP) length, and the like can be variously changed.

In the entire present disclosure, for example, when an article such as "a," "an," or "the" in English is added by a translation, the present disclosure may include a case in which a noun following the article is the plural.

In the present disclosure, a term "A and B are different" may mean "A and B are different from each other." Further, the term may mean "each of A and B is different from C." Terms such as "separated," "coupled," or the like may also be interpreted in similarly to "different."

Each aspect/embodiment described in this specification may be used alone, in combination, or may be switched in accordance with the execution. Further, indication of predetermined information (for example, indication of "being X") is not limited to being performed explicitly, but is performed by implicit (for example, not indicating the predetermined information) It is also good.

In the present disclosure, the transmitting unit 210 and the receiving unit 220 are examples of communication units. The MCG failure information is an example of information related to the occurrence of a failure in the master cell group. The transmitting unit 110 and the receiving unit 120 are examples of communication units.

Although the present disclosure has been described above in detail, it is obvious to those skilled in the art that the present disclosure is not limited to the embodiments described in the present disclosure. The present disclosure may be implemented in revised and modified forms without departing from the gist and scope of the present disclosure as configured forth in claims. Therefore, the description of the present disclosure is for the purpose of illustration and does not have any restrictive meaning to the present disclosure.

### EXPLANATIONS OF LETTERS OR NUMERALS

- 10: BASE STATION DEVICE

- 110: TRANSMITTING UNIT
- 120: RECEIVING UNIT
- 130: SETTING UNIT
- 140: CONTROL UNIT
- 20: USER EQUIPMENT
- 210: TRANSMITTING UNIT
- 220: RECEIVING UNIT
- 230: SETTING UNIT
- 240: CONTROL UNIT
- 1001: PROCESSOR
- 1002: STORAGE DEVICE
- 1003: AUXILIARY STORAGE DEVICE
- 1004: COMMUNICATION DEVICE
- 1005: INPUT DEVICE
- 1006: OUTPUT DEVICE

## Claims

1. A user equipment, comprising:
a communication unit that performs communication to which dual connectivity configured by a master cell group and a secondary cell group is applied;
a control unit that detects an occurrence of a failure in the master cell group; and
a transmitting unit that transmits information related to the occurrence of the failure in the master cell group to a master node of the master cell group,
wherein, in a state in which the communication unit continues a connection with a secondary node of the secondary cell group, the control unit changes a primary cell to another cell by handover in the same radio access technology (RAT).

2. The user equipment according to claim 1, wherein the transmitting unit transmits the information related to the occurrence of the failure in the master cell group to the master node via the secondary node via a split signaling radio bearer.

3. The user equipment according to claim 1, wherein the transmitting unit transmits the information related to the occurrence of the failure in the master cell group to the master node via the secondary node via a signaling radio bearer configured in the secondary node.

4. The user equipment according to claim 1, wherein the transmitting unit includes measurement results in the master cell group and the secondary cell group in the information related to the occurrence of the failure in the master cell group and transmits the information including the measurement results.

5. The user equipment according to claim 1, wherein the dual connectivity is any one of EN-DC, NE-DC, and NR-DC, and
a failure type included in the information related to the occurrence of the failure in the master cell group differs between: the EN-DC; and the NE-DC and the NR-DC.

6. A base station device, comprising:
a communication unit that performs communication to which dual connectivity configured by a master cell group and a secondary cell group is applied;
a receiving unit that receives information related to an occurrence of a failure in the master cell group from a user equipment; and
a control unit that decides whether to maintain, change, or release the master cell group based on the information related to the occurrence of the failure in the master cell group,
wherein, in a state in which the communication unit maintains a connection with a secondary node of the secondary cell group, the control unit causes the user equipment to change a primary cell to another cell by handover in the same radio access technology (RAT).
